(19) Europäisches Patentamt

European Patent Office

Office européen des brevets

(11) **EP 1 057 873 B1**

(12) **FASCICULE DE BREVET EUROPEEN**

(45) Date de publication et mention
de la délivrance du brevet:
**13.10.2004   Bulletin 2004/42**

(51) Int Cl.$^7$: **C08L 95/00**

(21) Numéro de dépôt: **00401437.9**

(22) Date de dépôt: **24.05.2000**

(54) **Emulsions bitumineuses, leur utilisation pour la réalisation de matériaux et revêtements routiers**

Bitumenemulsionen sowie deren Verwendung für Strassenmaterialen und -beläge

Bituminous emulsions, their use in materials and coatings for roads

(84) Etats contractants désignés:
**AT BE CH CY DE DK ES FI FR GB GR IE IT LI LU MC NL PT SE**

(30) Priorité:  **01.06.1999  FR 9906983**

(43) Date de publication de la demande:
**06.12.2000   Bulletin 2000/49**

(73) Titulaires:
• **CECA S.A.**
  **92800 Puteaux (Hauts de Seine) (FR)**
• **Atofina**
  **92091 Paris La Défense Cedex (FR)**

(72) Inventeurs:
• **Barreto, Gilles**
  **75012 Paris (FR)**
• **Rouet, Dominique**
  **95110 Sannois (FR)**

(74) Mandataire: **Treuil, Claude et al**
**Atofina**
**Département Propriété Industrielle**
**4-8 cours Michelet**
**La Défense 10**
**92091 Paris La Défense Cedex (FR)**

(56) Documents cités:
**GB-A- 2 255 291          US-A- 3 859 227**

**Description**

La présente invention concerne la fabrication d'émulsions bitumineuses ainsi que de tapis routiers obtenus à température ambiante (i-e en général entre 0 °C et +40 °C) à partir de granulats et de ces émulsions.

Les émulsions bitumineuses comprennent dans la plupart des cas un liant bitumineux, un tensioactif cationique -on parle alors d'émulsions cationiques -, ou un tensioactif anionique, - on parle alors d'émulsions anioniques - ou un tensioactif non-ionique - on parle alors d'émulsion non-ionique - et de l'eau. Les émulsions cationiques sont particulièrement prisées, à la fois pour la rapidité de leur rupture sur les granulats et pour les qualités d'adhésivité qui sont généralement obtenues entre les granulats et l'émulsion rompue conférant aux tapis routiers qui viennent juste d'être réalisés, de bonnes propriétés mécaniques. En sus des composants énoncés plus haut, les émulsions cationiques sont souvent acidifiées par ajout d'acide au sein de la phase aqueuse servant à la fabrication de l'émulsion et les émulsions anioniques sont généralement fabriquées en milieu alcalin.

Les matériaux bitumineux obtenus par enrobage ou mise en contact de granulats à l'aide d'émulsions bitumineuses sont connus de longue date. La profession distingue en particulier les enrobés à froid coulés , ouverts, semi-denses, denses, stockables, les grave-émulsions, les enduits superficiels et les couches d'accrochage.

Pour la réalisation de tapis routiers, un 1er type de matériaux bitumineux est constitué par les enrobés coulés à froid ; dans ce cas, le problème de la mise en place est résolu dans la plupart des cas si l'on suit les règles de l'art, puisque l'enrobé est mis en place sous forme de "soupe" quelques secondes après avoir été fabriqué. On retrouve par contre l'étape nécessaire de montée en cohésion qui se fait généralement sans sollicitation extérieure, par évolution chimique et physique du système bien que dans certains cas un compactage soit effectué. Cette évolution fait intervenir la coalescence du bitume de l'émulsion et est accompagnée d'un départ spontané de la phase aqueuse. Si le premier phénomène est assez bien maîtrisé par l'homme de l'art qui peut contrôler la formule de l'émulsion, la nature et la quantité d'additif de rupture, le contrôle du second phénomène n'a pas reçu de solution technique, ce qui peut parfois conduire à des cohésions insuffisantes au jeune âge.

Le 2nd type de matériaux bitumineux comprend les enrobés à froid ouverts, semi-denses, denses, les enrobés à froid stockables ainsi que les grave-émulsions ; le choix optimisé de l'émulsion (nature et quantité de l'émulsifiant, concentration en bitume, pH) permet de résoudre dans la majorité des cas, partiellement ou totalement, les problèmes d'enrobage, de transport et de mise en place de l'enrobé sous sa forme foisonnée. Cependant, une fois l'enrobé foisonné étalé sous forme de tapis, intervient l'étape de compactage dont le rôle est d'assurer la montée en cohésion, c'est-à-dire une bonne adhésivité entre bitume et granulat, afin de permettre au tapis de supporter le trafic, temporairement interrompu pendant la mise en place dans le cas de réfection ou de rénovation de chaussées. Cette cohésion est obtenue par le serrage du matériau, accompagné de l'expulsion de phase aqueuse et d'air. Les matériaux enrobés à froid présentent un fort pouvoir frottant, ce qui gêne le serrage : les compacités obtenues à froid sont très souvent inférieures aux compacités obtenues à partir des mêmes matériaux enrobés à chaud avec le même liant. Or il est bien connu de l'homme de l'art que la valeur de la compacité et l'importance du départ d'eau au compactage permettent de juger de la cohésion du matériau serré à froid. Ainsi, on constate qu'actuellement le succès dans la réalisation de chaussées soumises à des trafics intenses (T1 ou plus) ne dépend pas que de la technique mais aussi des conditions météorologiques le jour du chantier et même le jour suivant. Un soleil franc, une température élevée ou un vent suffisant contribuent au séchage du tapis et à sa montée en cohésion.

Dans tous ces cas d'application d'enrobés à froid considérés ici (stockables, ouverts, semi-denses, denses, coulés et graves-émulsions), (ré)ouvrir rapidement à la circulation pose d'autant plus de problèmes que le trafic est intense. Dans le cas d'une ouverture précoce, le film d'eau présent généralement entre les plus gros granulats et la couche de liant empêche la réalisation d'un contact adhésif liant/granulat. Un départ de granulats se produit, ce qui fragilise le tapis vis-à-vis des agressions et dégrade simultanément sa qualité de surface. Seul le séchage par évaporation permet de faire disparaître ce film aqueux, une fois la (ré)ouverture au trafic effectuée. Il est donc avantageux de pouvoir faire partir le plus d'eau possible pendant la période de mise en place et d'améliorer l'efficacité du compactage du tapis.

Le 3ème type de matériaux bitumineux considéré ici comprend les enduits superficiels, obtenus par application successive de couche(s) d'émulsion bitumineuse et de couche(s) de granulats qui s'interpénètrent lors du compactage par enchâssement des granulats au sein de l'émulsion en train de rompre. Pour éviter qu'une fois appliquée sur le sol, l'émulsion ne coule hors des limites de la chaussée que l'on est en train de réaliser, particulièrement dans les cas de chaussées en pente, il est nécessaire d'augmenter sa viscosité, par exemple en augmentant la quantité de bitume qu'elle contient au-delà de 65 % en volume ou bien en lui ajoutant un additif viscosifiant ; l'augmentation de concentration en liant bitumineux se fait en général au détriment de la finesse de l'émulsion, ce qui peut conduire à des problèmes de stabilité lors de son stockage. Même sans travailler à des concentrations en liant bitumineux élevées, le fait de rechercher des réactivités fortes des émulsions pour enduit conduit à utiliser peu d'émulsifiant, entraînant ainsi des problèmes de stockage sur des durées importantes. Le 3ème type de matériaux bitumineux comprend également les couches d'accrochage, obtenues par pulvérisation d'une émulsion à rupture rapide souvent utilisée chaude

EP 1 057 873 B1

sur un support. La rupture devant être rapide, la quantité d'émulsifiant utilisée est faible, ce qui peut là aussi, conduire à des problèmes de stabilité lors de stockages longs. Ces problèmes se trouvent exacerbés lorsque le bitume est difficile à émulsionner, cas que l'on rencontre pour les couches d'accrochage sans pouvoir adhésif en surface, pour lesquelles l'émulsion d'accrochage contient un liant bitumineux de basse pénétrabilité.

En pratique il apparaît que le comportement des enrobés à froid de l'art antérieur est fortement influencé par la teneur en eau d'ajout et l'on constate que le domaine utile en teneur en eau est étroit et doit donc être sévèrement contrôlé pour pouvoir obtenir des tapis routiers de qualité satisfaisante, ce qui oblige à contrôler très rigoureusement tout le processus de préparation de l'émulsion, puis de l'enrobé et enfin du tapis routier pour éviter toute dérive intempestive nuisible à la qualité du tapis routier final. Il serait donc aussi avantageux de pouvoir diminuer cette sensibilité du comportement à la teneur en eau d'ajout.

Exposé de l'invention

La présente invention propose des émulsions bitumineuses, des enrobés à froid et des graves-émulsions (du type 1 et 2) qui peuvent être utilisés pour la réalisation de tapis routiers présentant de manière surprenante un départ d'eau amélioré de manière spontanée pour le 1er type immédiatement après la mise en place sans compactage et au compactage pour le 1er et 2nd type, ainsi qu'une compacité améliorée par rapport aux tapis routiers de l'art antérieur, et ce, sans changer les conditions opératoires lors des étapes de fabrication des émulsions bitumineuses et des enrobés, de leur stockage et de leur transport éventuels, leur déchargement, leur mise en place et leur éventuel compactage. La présente invention propose aussi des émulsions pour enduits superficiels et des enduits superficiels, des émulsions pour couches d'accrochage et des couches d'accrochage (de type 3), qui peuvent être utilisés pour la réalisation de tapis routiers. Ces émulsions présentent des capacités au stockage améliorées et peuvent présenter des viscosités augmentées sans utiliser de viscosifiants de l'art antérieur et sans augmentation de la concentration en bitume. La présente invention est particulièrement intéressante, notamment dans le cas de rénovation de chaussées, dans la mesure où elle permet d'obtenir des tapis routiers qui peuvent être réouverts très rapidement au trafic routier sans qu'il soit nécessaire d'attendre plusieurs heures, voire plusieurs jours, l'évaporation de la phase aqueuse résiduaire non évacuée lors de la rupture de l'émulsion et du compactage éventuel. La stabilisation rapide des tapis routiers selon l'invention présente un intérêt économique évident.

Par rapport aux émulsions et aux enrobés de l'art antérieur dont le comportement et la qualité du tapis routier qui en est issu sont fortement influencés par la teneur en eau d'ajout, les émulsions et enrobés selon l'invention permettent d'obtenir des tapis routiers de bonne qualité et ce, tout en supportant des variations et dérives significativement importantes de la teneur en eau d'ajout. Cette marge de manoeuvre facilite la fabrication des enrobés de la présente invention.

Les émulsions selon l'invention sont caractérisées en ce qu'elles comprennent, outre le ou les émulsifiants cationique(s), anionique(s) ou non-ionique(s) usuel(s), le liant bitumineux et l'eau, au moins un additif tensioactif. Ces additifs tensioactifs, utilisés seuls ou collectivement, peuvent être mélangés avec l(es) émulsifiant(s) cationique(s), anionique(s) ou non-ionique(s) avant la fabrication de la phase émulsifiante ou dispersés, soit dans la phase émulsifiante telle que fabriquée selon l'art à l'aide d'émulsifiants cationiques, anioniques ou non-ioniques avant la fabrication de l'émulsion, soit dans l'émulsion fabriquée selon l'art à l'aide d'émulsifiants cationiques, anioniques ou non-ioniques, à n'importe quel moment entre la fin de l'émulsification et l'utilisation de l'émulsion. Il est possible d'additiver l'eau servant à humidifier les granulats. Dans ce cas, pour faciliter la dispersion on pourra additiver l'eau à l'aide d'un émulsifiant non-ionique ou on pourra se mettre en milieu acide en présence d'un émulsifiant cationique ou en milieu basique en présence d'un émulsifiant anionique. Il est également possible d'incorporer une partie de l'additif tensioactif dans l'émulsion et le reste dans l'eau d'ajout servant à humidifier les granulats. Dans le présent exposé, on fait une distinction entre l'émulsifiant et l'additif tensioactif (le tensioactif) : l'émulsifiant est le produit chimique qui permet au sens de l'art antérieur, de mettre un liant bitumineux en émulsion, alors que l'additif tensioactif est le produit chimique qui, ajouté à une formulation d'émulsion bitumineuse selon l'art antérieur, permet d'obtenir une émulsion bitumineuse selon la présente invention.

Les additifs tensioactifs mis en oeuvre dans les émulsions cationiques, anioniques ou non-ioniques selon l'invention peuvent être notamment choisis parmi :

a- les tensioactifs non-ioniques polyoxyéthylés, seuls ou en mélange, de formule chimique brute :

$$R_x[O(C_2H_4)]_y OH \text{ ou } R_xCO[O(C_2H_4)]_y OH$$

où $R_x$ représente soit une chaîne carbonée linéaire ou ramifiée, saturée ou non, substituée ou non, soit un alkyl(ène)phényle, soit une des chaînes précédentes pour laquelle l'hydrogène est partiellement ou totalement

3

substitué par du fluor,

x représente le nombre d'atomes de carbone de la chaîne carbonée ou de l'alkyl(ène)phényle,

y représente le nombre de motifs oxyde d'éthylène,

avec $7 \leq x \leq 22$, $0 \leq y \leq 8$ et de préférence $y \leq 6$ pour les molécules correspondant à la première formule brute

avec $7 \leq x \leq 22$, $2 \leq y \leq 8$ et de préférence $y \leq 6$ pour les molécules correspondant à la seconde formule brute.

Les tensioactifs non-ioniques préférés par la demanderesse sont choisis parmi les alkyl(ène) éther polyoxyéthylés pour lesquels $7 \leq x \leq 22$, $2 \leq y \leq 6$

les alkyl(ène) ester polyoxyéthylés pour lesquels $7 \leq x \leq 21$, $2 \leq y \leq 6$

les alkyl(ène)phénol polyoxyéthylés pour lesquels $7 \leq x \leq 22$, $2 \leq y \leq 6$ seuls ou en mélange

b- les tensioactifs non-ioniques polyoxyéthylés, seuls ou en mélange, de formule chimique brute :

$$R_x[O(C_2H_4)]_y\ OH \text{ ou } R_xCO[O(C_2H_4)]_y\ OH$$

où $R_x$ représente une chaîne poly(diméthylsiloxane) pour laquelle x représente le nombre d'atomes de silicium, la chaîne étant linéaire ou ramifiée,

y représente le nombre de motifs oxyde d'éthylène,

avec $4 \leq x \leq 15$, $4 \leq y \leq 20$

c- les tensioactifs amphotères, seuls ou en mélange, de formule chimique brute :

$$R_x[N^+(CH_3)_2](CH_2)_y\ A \text{ ou } R_xNH(CH_2)_y\ COOH \text{ ou } R_xNH(CH_2)_y\ B,C$$

où $R_x$ représente les mêmes chaînes qu'à l'alinéa a-

A représente soit le groupement $COO^-$, soit le groupement $OSO_3^-$, soit le groupement $OSO_2^-$,

B représente soit le groupement $OSO_3^-$, soit le groupement $OSO_2^-$,

C représente soit le contre-ion cationique d'un métal alcalin ou alcalino-terreux, du fer, du cuivre, du manganèse ou du zinc, soit le cation ammonium, en proportion telle que le sel soit neutre électriquement,

y représente le nombre de motifs $CH_2$,

avec $7 \leq x \leq 22$, $0 \leq y \leq 4$.

d- les tensioactifs amphotères, seuls ou en mélange, de formule chimique brute :

$$R_x[N^+(CH_3)_2](CH_2)_y\ A \text{ ou } R_xNH(CH_2)_y\ COOH \text{ ou } R_xNH(CH_2)_y\ B,C$$

où $R_x$ représente les mêmes chaînes qu'à l'alinéa b-

A représente les mêmes groupements qu'à l'alinéa c-

B représente les mêmes groupements qu'à l'alinéa c-

C représente les mêmes ions qu'à l'alinéa c-, en proportion telle que le sel soit neutre électriquement,

y représente le nombre de motifs $CH_2$,

avec $4 \leq x \leq 15$, $0 \leq y \leq 4$

e- les tensioactifs alcanolamide, seuls ou en mélange, de formule brute :

$$R_xCONH(CH_2)_yOH \text{ ou } R_xCON[(CH_2)_yOH][(CH_2)_zOH]$$

où $R_x$ représente les mêmes chaînes qu'à l'alinéa a-

avec $7 \leq x \leq 22$, $1 \leq y \leq 4$, $1 \leq z \leq 4$

f- les tensioactifs oxyde d'amine, seuls ou en mélange, de formule brute :

$$R_x(CH_3)_2N \rightarrow O$$

où $R_x$ représente les mêmes chaînes qu'à l'alinéa a-

avec $7 \leq x \leq 22$.

La concentration en additif(s) tensioactif(s) non-ionique(s) des émulsions selon l'invention ne sera en général pas inférieure à 0,2 kg par tonne d'émulsion. Elle ne sera pas en général supérieure à 8 kg par tonne d'émulsion.

L'importance de l'additivation en additif(s) tensioactif(s) est jugée par rapport à la concentration en émulsifiant(s) cationique(s), anionique(s) ou non-ionique(s) utilisée par l'homme de l'art. La concentration en additif(s) tensioactif(s) utilisée dépend donc du type de matériau bitumineux que l'on veut fabriquer. Généralement, cette concentration ne dépassera pas la concentration en émulsifiant(s) cationique(s), anionique(s) ou non-ionique(s) de l'émulsion. La nature chimique et la quantité d'additif(s) tensioactif(s) permettant d'optimiser les propriétés applicatives énoncées ci-dessus dépendent du granulat utilisé pour les matériaux bitumineux de type 1 et 2.

Parmi les émulsifiants cationiques utilisables pour la fabrication des émulsions cationiques et des matériaux bitumineux envisagés selon l'invention, on peut citer les émulsifiants cationiques usuels et notamment :

* les alkyl(ène) polyamines, et plus particulièrement les suif (poly)propylène polyamines comme la suif propylène diamine (définition EINECS : amines, N-suif alkyltriméthylènedi-, RN = 61791-55-7) représentée industriellement par le Dinoram® S de CECA S.A., la suif dipropylène triamine (amines, N-suif alkyldipropylènetri-, RN = 61791-57-9), la suif tripropylène tétramine (amines, N-suif alkyltripropylènetétra-, RN = 68911-79-5) cette dernière étant industriellement bien représentée par le Polyram®S de CECA S.A,

* les alky(ène)polyamines oxyalkylées et plus particulièrement la suif dipropylène triamine oxypropylée (amines, N-suif propanol-2 [[[(amino-3 propyl)amino]-3 propyl]imino]-1,1'bis, RN = 97592-79-5) cette dernière étant industriellement bien représentée par le Polyram®SL de CECA S.A,

* les sels d'ammonium quaternaire comme la suif propylène diamine quaternisée au chlorure de méthyle (composé de l'ion ammonium quaternaire, pentaméthylsuif alkyltriméthylènedi-, chlorure, RN = 68607-29-4) bien représentée par exemple par le Stabiram®MS3 de CECA S.A,

* les alkyl(ène)amidoamines et plus précisément les alkyl(ène)amidoamines de suif ou de taloil, leurs dérivés de cyclisation alkylimidazolines, ou leurs mélanges (produits de condensation d'acides gras en $C_8$-$C_{22}$ avec les polyalkylènes en $C_2$-$C_3$ polyamines et avec les éthanolamines, leurs mélanges et produits de cyclisation des amides obtenus), bien représentés par l'émulsifiant L60 de CECA S.A.

La concentration en émulsifiant(s) cationique(s) des émulsions selon l'invention ne sera en général pas inférieure à 0,8 kg par tonne d'émulsion. Elle ne sera pas en général supérieure à 30 kg par tonne d'émulsion. La concentration en émulsifiant(s) cationique(s) utilisée dépend aussi du type de matériau bitumineux que l'on veut fabriquer.

On préfère le plus souvent ajouter aux phases aqueuses des émulsifiant(s) cationique(s) une certaine quantité d'acide.

Les émulsifiants anioniques utilisables pour la fabrication des émulsions anioniques et des matériaux bitumineux selon l'invention peuvent être choisis parmi les émulsifiants anioniques usuels et notamment les alkyl(ène) carboxylates, alky(ène)sulfates et alkyl(ène)sulfonates, les alkyl(ène)aryl(ène)carboxylates, alkyl(ène)aryl(ène)sulfates et alkyl(ène)aryl(ène)sulfonates ainsi que les alkyl(ène)(aryl(ène))esterphosphoriques avec une chaîne alk(én)yle ou alkyl(ène)(aryl(ène)) comprenant entre 8 et 22 atomes de carbone. On préfère le plus souvent ajouter aux phases aqueuses des émulsifiant(s) anionique(s) une certaine quantité de base.

La concentration en émulsifiant(s) anionique(s) des émulsions selon l'invention ne sera en général pas inférieure à 0,8 kg par tonne d'émulsion. Elle ne sera pas en général supérieure à 30 kg par tonne d'émulsion. La concentration en émulsifiant(s) anionique(s) utilisée dépend aussi du type de matériau bitumineux que l'on veut fabriquer.

Les émulsifiants non-ioniques utilisables pour la fabrication des émulsions non-ioniques et des matériaux bitumineux selon l'invention peuvent être choisis parmi les émulsifiants non-ioniques usuels et notamment les alkyl (ène)poly(oxyéthylène)alcools, les alkyl(ène)aryl(ène)poly(oxyéthylène)alcools, avec une chaîne alk(én)yle comprenant entre 8 et 22 atomes de carbone et un nombre de motifs oxyde d'éthylène supérieur ou égal à 9.

La concentration en émulsifiant(s) non-ionique(s) des émulsions selon l'invention ne sera en général pas inférieure à 0,8 kg par tonne d'émulsion. Elle ne sera pas en général supérieure à 20 kg par tonne d'émulsion. La concentration en émulsifiant(s) non-ionique(s) utilisée dépend aussi du type de matériau bitumineux que l'on veut fabriquer.

Les liants bitumineux mis en oeuvre peuvent être choisis parmi les liants bitumineux usuellement mis en oeuvre dans les émulsions bitumineuses pour matériaux de type 1, 2 et 3 ; leur pénétrabilité est en général comprise entre 20/30 et 500.

Les émulsions peuvent être préparées avec un ou plusieurs liants ; dans ce dernier cas, soit les différents liants sont mélangés à chaud avant l'émulsification, soit on prépare 2 émulsions (ou plus) contenant chacune un liant que l'on mélangera ensuite pour donner une émulsion dite mixte qui sera mise en contact avec les granulats pour la réalisation de l'enrobé. Un exemple de préparation d'émulsion bitumeuse mixte est détaillé dans le brevet EP 589.740 B1 au nom de la demanderesse dont le contenu est incorporé par référence ; ce brevet décrit des émulsions mixtes, l'une à base de liant bitumineux mou et l'autre à base de liant bitumineux dur pour améliorer la maniabilité de l'enrobé tout en conservant une bonne résistance mécanique du tapis routier final.

La présente invention a également pour objet des matériaux bitumineux du type 1 et 2 et des tapis routiers obtenus :

* soit à partir des émulsions bitumeuses selon l'invention telles que définies ci-dessus et de granulats humidifiés avec de l'eau d'ajout contenant éventuellement elle-même au moins un additif tensioactif,
* soit à partir d'émulsions bitumeuses usuelles (i-e ne contenant aucun additif tensioactif tel que défini plus haut) et de granulats humidifiés avec de l'eau d'ajout contenant au moins un additif tensioactif.

Ces types d'enrobés à froid (1er et 2ème types), à savoir enrobés coulés, enrobés ouverts, semi-denses, denses, enrobés stockables et grave-émulsions, sont obtenus par malaxage des granulats humidifiés avec l'eau d'ajout et de l'émulsion bitumeuse selon les techniques et au moyen d'appareillages connus. Ce que l'on vise à obtenir, dans ces cas, est une compacité améliorée et une quantité d'eau éliminée plus importante, une fois toutes les étapes précédant l'ouverture au trafic réalisées. Selon l'invention, dans le cas des graves-émulsions, des enrobés stockables ou ouverts à froid, des enrobés semi-denses à froid et des enrobés denses à froid, le départ amélioré d'eau s'effectue lors du compactage. L'amélioration de la compacité est visible en fin de compactage. Selon l'invention, dans le cas des enrobés coulés à froid, le départ d'eau amélioré s'effectue sans sollicitation extérieure, de manière spontanée. Dans ce dernier cas, il peut aussi y avoir amélioration de la compacité, bien qu'il n'y ait quasiment pas de sollicitation extérieure, par auto-compactage dû à l'effet de la gravité. Pour améliorer la cohésion immédiate et finale, il est possible de procéder à un compactage : dans ce cas, la diminution de porosité et l'augmentation d'élimination de l'eau sont plus importantes avec les enrobés du type 1 selon l'invention. Pour ces types de matériaux (1 et 2), les étapes d'enrobage, de rupture de l'émulsion, de transport éventuel, de déchargement et de mise en place sont réalisées de la même façon et ne nécessitent donc pas de modification du matériel ou de modifications des réglages.

Les enduits superficiels à froid (type 3) sont préparés par mise en place de couche(s) des granulats et de couche(s) d'émulsion bitumineuse à l'aide desquelles on couvre successivement la surface destinée à recevoir le tapis routier selon les techniques et avec les appareils habituels ; le tapis routier est obtenu après la rupture de l'émulsion et le compactage. En cas de forte pente du support on exige des viscosités d'émulsion élevées. Les solutions actuellement utilisées consistent à augmenter la concentration en bitume au delà de 65% et/ou à additiver la phase continue à l'aide de viscosifiants. Compte tenu aussi des fortes réactivités demandées à l'émulsion et donc des faibles quantités d'émulsifiant utilisées, se pose souvent le problème de la stabilité au stockage des émulsions pour enduits. Les problèmes rencontrés lors de la fabrication et l'utilisation des émulsions pour couches d'accrochage (type 3) sont identiques. Ils sont même accentués lorsqu'on veut utiliser un liant présentant une pénétrabilité très faible car ce liant est plus difficile à émulsionner : c'est le cas des émulsions pour couches d'accrochage sans « tack ». Selon la présente invention, un ajout suffisant des additifs décrits ci-dessus à une formule utilisée par l'homme de l'art permet une augmentation de la viscosité sans modifier l'émulsification (s'il est ajouté dans la phase émulsifiante) : la cinétique de rupture est peu modifiée. De plus à des quantités d'ajout de l'additif tensioactif encore plus importantes, on peut être amené à réviser à la hausse la quantité de l'émulsifiant non-ionique, anionique ou cationique utilisé par l'homme de l'art de manière à conserver une cinétique de rupture constante. Dans ce cas l'émulsification et la stabilité au stockage sont fortement améliorées et la viscosité augmentée. On a ainsi la possibilité, par ajout des additifs tensioactifs selon l'invention, d'obtenir la cinétique de rupture adaptée, une viscosité suffisamment forte pour éviter les problèmes de coulure ainsi qu'une stabilité au stockage améliorée.

## EXEMPLES

### Préparation de l'émulsion

Dans les exemples 1 à 4, on prépare des émulsions bitumineuses cationiques à partir d'un mélange d'émulsifiant cationique, d'acide, de liant bitumineux et d'eau auquel on ajoute l'additif tensioactif juste avant le début de la phase de malaxage avec les granulats pour préparer l'enrobé.

Dans les exemples 5, 7 et 8, on prépare une émulsion bitumineuse cationique à partir d'eau -à laquelle a été ajouté l'additif tensioactif non-ionique d'émulsifiant cationique, d'acide et de liant bitumineux.

Dans l'exemple 6, on prépare une émulsion bitumineuse cationique ne contenant aucun additif tensioactif non-ionique avec laquelle on prépare un enrobé selon l'invention par mélange avec des granulats humidifiés avec une eau d'ajout additivée en additif tensioactif non-ionique, tensioactif cationique et acide.

Dans l'exemple 9, on prépare une émulsion bitumineuse cationique à partir d'un mélange d'émulsifiant cationique, d'acide, de liant bitumineux et d'eau auquel on ajoute un additif tensioactif non-ionique sur chaîne alkyle fluorée juste avant le début de la phase de malaxage avec les granulats pour préparer l'enrobé.

Préparation de l'enrobé

On place les granulats dans un malaxeur planétaire (SR Consulting, type SRC5A, vitesse de rotation 30 trs/min) où on les malaxe pendant 30 s. On verse ensuite l'eau d'ajout et effectue un nouveau malaxage pendant encore 30 s avant de rajouter l'émulsion. On poursuit le malaxage de tous les composants de l'enrobé pendant une minute puis on stocke l'enrobé ainsi obtenu pendant une heure dans une gamelle, avant de l'introduire dans le moule et de le compacter.

Préparation du tapis routier

Le compactage des enrobés est effectué à la Presse à Cisaillement Giratoire (modèle Invelop Oy ICT-100RB) : En sortie de gamelle, l'enrobé est placé dans un moule PCG (moule cylindrique de 100 mm de diamètre et de hauteur de 25 cm) puis il subit une compression à 0,6 MPa, avec un angle de débattement de 1°, pendant N tours ou girations. Le nombre de tours effectués dépend du type d'application : 30 tours pour les enrobés ouverts à froid et 120 girations pour les enrobés denses à froid. En fin de compactage, l'éprouvette est à nouveau pesée, ce qui permet de calculer le pourcentage d'eau évacuée au cours du compactage. On calcule le taux de vide par la mesure de la hauteur du revêtement avant et après compactage.

Evaluation des performances

L'amélioration des performances des émulsions et des produits routiers selon la présente invention a été jugée par comparaison entre formules selon l'art antérieur (en l'absence de l'additif tensioactif) et formules selon l'invention (en présence de l'additif tensioactif). Pour que la comparaison soit valable, dans les essais qui suivent, le même émulsifiant cationique a été utilisé dans les deux formules. Par contre dans certains cas la concentration en émulsifiant cationique n'est pas la même pour les deux formules, de manière à conserver des cinétiques de rupture voisines et donc de maintenir constants les réglages utilisés sur le terrain. On entend par cinétiques de rupture voisines des cinétiques telles que les ruptures d'émulsion jugées visuellement se font sur des durées ne différant pas de plus de 25%. Il est en effet possible qu'en présence d'additif tensioactif, à concentration constante en émulsifiant cationique, la cinétique de rupture soit modifiée, ce qui obligerait donc à modifier les réglages utilisés sur le terrain, ce qui n'est pas souhaitable.

Exemple 1 (enrobé ouvert à froid)

On prépare un enrobé ouvert à froid selon le mode opératoire décrit ci-dessus. Les granulats utilisés sont une Cornéenne dont la distribution granulométrique est la suivante :

| 0/2 mm | 44 % |
|---|---|
| 2/4mm | 12 % |
| 6/10 mm | 44 % |

La teneur en filler (particules de granulats passant au travers d'un tamis de 80 μm) est de l'ordre de 8 % en poids.

La teneur en eau d'ajout dans l'enrobé est de 4 g pour 100 g de granulats.

L'émulsion bitumineuse contient :

* 61 % en volume d'un bitume de pénétrabilité 70 commercialisé par la société Elf,
* 6 kg d'émulsifiant cationique (Polyram® SL commercialisé par la société CECA que l'on a acidifié à l'acide chlorhydrique de telle manière que le pH du savon soit de 2), pour 1.000 kg d'eau + bitume,
* 1,3 kg de tensioactif non-ionique (alcool à chaîne grasse de 18 atomes de carbone (chaîne oléique) vendu sous la dénomination commerciale Rofanol® éthoxylé avec 4,5 moles d'oxyde d'éthylène par mole d'alcool en moyenne) pour 1.000 kg d'eau d'ajout + bitume + tensioactif cationique + acide. La teneur en bitume dans l'enrobé est de 6 g pour 100 g de granulats.

Dans les mêmes conditions opératoires et à titre de comparaison, on prépare un enrobé à froid à l'aide de granulats, d'eau d'ajout et d'une émulsion bitumineuse qui se différencie de l'émulsion bitumineuse précédemment décrite en ce qu'elle ne contient aucun tensio-actif non-ionique.

3 essais de compactage sont effectués avec chaque enrobé à froid selon le mode opératoire détaillé plus haut. Pour chaque essai, on détermine la porosité et le départ d'eau à l'issue du compactage après 30 girations et on calcule la moyenne sur ces 3 essais. Les résultats sont réunis dans le tableau 1.

Tableau 1

| type d'enrobé | N° essai | Porosité (%) | eau partie (%) |
|---|---|---|---|
| Enrobé ouvert sans tensio-actif non-ionique | 1 - 1 | 17,3 | 15 |
| | 1 - 2 | 17,7 | 17 |
| | 1 - 3 | 17,4 | 18,4 |
| | Moyenne | **17,5** | **16,8** |
| Enrobé ouvert selon l'invention | 1 - 4 | 16,7 | 25,4 |
| | 1 - 5 | 16,3 | 23,7 |
| | 1 - 6 | 16,5 | 23,3 |
| | Moyenne | **16,5** | **24,1** |

On constate que la présence de tensioactif non-ionique augmente la compacité finale ainsi que le départ d'eau de l'enrobé.

On peut également signaler qu'en moyenne, l'apparition de l'eau se fait plus tôt pour l'enrobé contenant le tensioactif non-ionique mais que la cinétique de rupture des 2 émulsions sont voisines.

Exemple 2 (enrobé ouvert à froid)

On prépare un enrobé ouvert à froid selon le mode opératoire décrit ci-dessus. Les granulats, le bitume et l'émulsifiant cationique utilisés sont identiques à ceux de l'exemple 1 ; les teneurs en granulats, eau d'ajout, bitume et émulsifiant cationique mis en oeuvre sont identiques à celle de l'enrobé de l'exemple 1. Par contre, le tensioactif non-ionique utilisé est un acide sur chaîne grasse à 18 atomes de carbone (chaîne oléique) éthoxylé avec 6 moles d'oxyde d'éthylène par mole d'acide en moyenne ; il est ajouté dans l'émulsion déjà fabriquée à raison de 1,6 kg pour 1.000 kg d'eau + bitume + tensioactif cationique + acide.

Dans les mêmes conditions opératoires et à titre de comparaison, on prépare un enrobé à froid à partir d'une émulsion bitumineuse qui se différencie de l'émulsion bitumineuse précédemment décrite en ce qu'elle ne contient pas de tensio-actif non-ionique.

3 essais de compactage sont effectués avec chaque enrobé à froid selon le mode opératoire détaillé plus haut. Pour chaque essai, on détermine la porosité et le départ d'eau à l'issue du compactage après 30 girations et on calcule la moyenne sur ces 3 essais. Les résultats sont réunis dans le tableau 2.

Tableau 2

| Type d'enrobé | n° essai | porosité (%) | eau partie (%) |
|---|---|---|---|
| Enrobé ouvert sans tensio-actif non-ionique | 2 - 1 | 16,55 | 18 |
| | 2 - 2 | 17,8 | 17 |
| | 2 - 3 | 18,6 | 16,3 |
| | Moyenne | **17,65** | **17,1** |
| Enrobé ouvert selon l'invention | 2 - 4 | 16,3 | 27,55 |
| | 2 - 5 | 17,1 | 19 |
| | 2- 6 | 16,8 | 20 |
| | moyenne | **16,7** | **22,2** |

On constate que l'enrobé selon l'invention de l'exemple 2 conduit à des départs de phase aqueuse et des compacités finales plus élevés que ceux de l'enrobé sans tensioactif non-ionique mais qui sont toutefois moins élevés que ceux de l'enrobé selon l'invention décrit à l'exemple 1.

On signale que le départ d'eau est beaucoup plus rapide pour l'enrobé contenant un tensioactif non-ionique que pour celui n'en contenant pas et que les cinétiques de rupture des 2 émulsions sont voisines.

Exemple 3 (enrobé ouvert à froid)

On prépare un enrobé ouvert à froid selon le mode opératoire décrit ci-dessus avec les mêmes granulats que ceux utilisés pour la préparation des enrobés des exemples 1 et 2 et utilisés dans les mêmes proportions que dans les exemples précédents ; la teneur en eau d'ajout de l'enrobé est identique à celles des enrobés des exemples 1 et 2.

Selon la méthode décrite dans le brevet EP 589.740.B1, on prépare une émulsion mixte dont la pénétrabilité résiduelle du liant est égale à 70 contenant 61 % en volume de bitumes et obtenue par mélange de 60 parties en poids d'une 1ère émulsion contenant 61 % en volume d'un bitume de pénétrabilité 20/30 et de 40 parties en poids d'une 2nde émulsion contenant 61 % en volume d'un bitume de pénétrabilité 300/400, les 2 bitumes étant commercialisés par la société Elf, la 1ère et la 2nde émulsions contenant chacune 6 kg de Polyram® SL (acidifié à l'acide chlorhydrique de telle manière que le pH du savon soit de 2) pour 1.000 kg d'eau + bitume.

Une fois l'émulsion mixte fabriquée à partir des 2 émulsions décrites ci-dessus, on lui ajoute un tensioactif non-ionique qui est un alcool sur chaîne grasse de 10 atomes de carbone Nacol®, avec 4 moles d'oxyde d'éthylène par mole d'alcool que l'on nomme par la suite Nacol® 4 OE à raison de 1,8 kg de tensioactif non-ionique pour 1.000 kg d'eau + bitume + tensioactif cationique + acide. Dans les conditions opératoires détaillées plus haut, on procède à la fabrication puis au compactage d'un enrobé à partir de cette émulsion mixte. La teneur en bitume est de 6 g pour 100 g de granulat.

A titre comparatif et dans les mêmes conditions opératoires, on prépare et compacte un enrobé obtenu à partir d'une émulsion à laquelle n'a pas été ajouté de tensioactif non-ionique.

Les résultats de compactage sont présentés dans le tableau 3, la porosité et le départ d'eau étant calculés à l'issue du compactage après 30 girations.

Tableau 3

| Type d'enrobé | n° essai | porosité (%) | eau partie (%) |
|---|---|---|---|
| Enrobé ouvert sans tensio-actif Non-ionique | 3 - 1 | 17,7 | 15,2 |
| | 3 - 2 | 18,05 | 12,7 |
| | 3 - 3 | 18 | 14 |
| | Moyenne | **17,9** | **14** |
| Enrobé ouvert selon l'invention | 3 - 4 | 17,1 | 18,3 |
| | 3 - 5 | 17,4 | 18,4 |
| | 3 - 6 | 17,2 | 17,7 |
| | Moyenne | **17,2** | **18,1** |

L'élimination de phase aqueuse et la compacité sont améliorées en présence du tensioactif non-ionique ; on signale que le départ d'eau se produit en moyenne après 4 girations, alors que pour l'enrobé ne contenant pas de tensioactif non-ionique, il ne se produit en moyenne qu'après 26 girations et que les cinétiques de rupture des 2 émulsions sont voisines.

Exemple 4 (enrobé semi-dense à dense à froid)

Selon le mode opératoire détaillé à l'exemple 3, on prépare un enrobé semi-dense à dense à froid.

Les granulats utilisés, de nature granitique présentent la distribution granulométrique suivante :

| 0/2 mm | 39 % |
|---|---|
| 6/10 mm | 61 % |

et leur teneur en filler est de l'ordre de 7,5 %. La teneur en eau d'ajout est de 6 g pour 100 g de granulats.

On prépare une émulsion mixte dont la pénétrabilité résiduelle du liant est égale à 80 contenant 63 % en volume de bitumes et obtenue par mélange de 60 parties en poids d'une 1ère émulsion contenant 63 % en volume d'un bitume de pénétrabilité 20/30 et de 40 parties en poids d'une 2nde émulsion contenant 63 % en volume d'un bitume de pénétrabilité 500, les 2 bitumes étant commercialisés par la société Elf, la 1ère et la 2nde émulsions contenant chacune 6 kg de Polyram® SL (acidifié à l'acide phosphorique de telle manière que le pH du savon soit de 2) pour 1.000 kg + bitume. La teneur en bitume est de 5,7 g pour 100 g de granulats.

On prépare et compacte, à titre comparatif un enrobé, à partir de cette émulsion mixte, des granulats et de l'eau d'ajout.

A partir de cette émulsion mixte, on prépare 3 émulsions mixtes par ajout :

- pour la 1ère du Nacol® 4OE, à raison de 1,85 kg pour 1.000 kg d'eau + bitume + tensioactif cationique + acide (émulsion selon l'invention),
- pour la 2nde d'un alcool sur chaîne grasse de 10 atomes de carbone Nacol®, avec 12 moles d'oxyde d'éthylène par mole d'alcool, que l'on nomme par la suite Nacol® 12OE, à raison de 1,85 kg pour 1.000 kg d'eau + bitume + tensioactif cationique + acide,
- pour la 3ème d'un alcool sur chaîne grasse essentiellement oléique, le Rofanol® 70/75 à raison de 2 kg pour 1.000 kg d'eau + bitume + tensioactif cationique + acide (émulsion selon l'invention).

Puis on prépare et compacte 3 enrobés à partir de chacune de ces 3 émulsions, des granulats et de l'eau d'ajout dans les proportions indiquées plus haut. Les résultats sont présentés dans le tableau 4. La porosité et le départ d'eau sont calculés à l'issue du compactage après 120 girations.

Tableau 4

| Type d'enrobé | n° essai | Porosité (%) | eau partie (%) |
|---|---|---|---|
| Enrobé semi-dense sans tensio-actif non-ionique | 4 - 1 | 11,15 | 53,7 |
| | 4 - 2 | 10,7 | 54,6 |
| | 4 - 3 | 11,6 | 50,4 |
| | Moyenne | **11,2** | **52,9** |
| Enrobé semi-dense selon l'invention avec NACOL 4 OE | 4 - 4 | 9,8 | 62,5 |
| | 4 - 5 | 9,63 | 63,5 |
| | 4 - 6 | 10,4 | 61,75 |
| | Moyenne | **9,9** | **62,6** |
| Enrobé semi-dense avec NACOL 12 OE | 4 - 7 | 10,9 | 49,6 |
| | 4 - 8 | 11,4 | 53,1 |
| | 4 - 9 | 11,1 | 52,6 |
| | Moyenne | **11,1** | **51,8** |
| Enrobé dense selon l'invention avec Rofanol 70/75 | 4 - 10 | 9,1 | 65,3 |
| | 4 - 11 | 9,2 | 67,6 |
| | 4 - 12 | 8,9 | 66,8 |
| | Moyenne | **9,1** | **66,6** |

On constate que la compacité et le départ d'eau obtenus par compactage de l'enrobé selon l'invention préparé à partir de l'émulsion contenant le tensioactif non-ionique Nacol® 4 OE et de l'émulsion contenant le tensioactif Rofanol®70/75 sont plus importants que ceux obtenus par compactage de l'enrobé préparé à partir de l'émulsion contenant le tensioactif non-ionique Nacol® 12 OE ou de l'enrobé préparé à partir de l'émulsion mixte ne contenant aucun tensioactif non-ionique .

En outre, on signale que la vitesse de rupture de l'émulsion contenant le Nacol® 12 OE est plus longue que celle de l'émulsion contenant le Nacol® 4 OE (dans les mêmes proportions) et que celle ne contenant aucun tensioactif non-ionique. La cinétique de rupture de l'émulsion avec le Rofanol®70/75 est peu différente de celle de l'émulsion de référence.

Lorsque l'on prépare et compacte un autre enrobé à partir d'une émulsion mixte contenant du Nacol® 12 OE qui se distingue de l'émulsion contenant du Nacol® 12 OE décrite ci-dessus en ce qu'elle contient 0,5 kg de Nacol® 12 OE pour 1.000 kg d'eau + bitume + émulsifiant cationique + acide au lieu de 1,85 kg, on note que la rupture de cette émulsion est plus rapide que celle de l'émulsion contenant presque 3 fois plus de tensioactif non-ionique mais reste plus lente que la rupture de l'émulsion sans tensioactif non-ionique. De plus, si l'on prépare et compacte un enrobé à partir d'une émulsion mixte contenant 0,5 kg de Nacol® 12 OE pour 1.000 kg d'eau d'ajout + bitume + émulsifiant cationique + acide, on constate que la compacité et le départ d'eau restent au niveau de la référence sans tensioactif non ionique.

Exemple 5 (enrobé ouvert à froid)

Les granulats utilisés sont identiques à ceux de l'exemple 1.
Les teneurs en granulats, en bitume et en eau d'ajout sont identiques à celles de l'exemple 1.
L'émulsion contient

* 60 % en volume du bitume décrit à l'exemple 1,
* 6 kg de Polyram® SL (acidifié à l'acide chlorhydrique de telle manière que le pH du savon soit de 2), pour 1.000 kg d'eau + bitume
* 3 kg de Rofanol® pour 1.000 kg d'eau + bitume + émulsifiant cationique + acide.

On prépare et compacte un enrobé selon l'invention à partir de l'émulsion, des granulats et de l'eau d'ajout décrits ci-dessus et à titre comparatif un enrobé à partir d'une émulsion sans tensioactif non-ionique.
Les résultats sont présentés dans le tableau 5.

Tableau 5

| Type d'enrobé | n° essai | porosité (%) | eau partie (%) |
|---|---|---|---|
| Enrobé ouvert sans tensio-actif non-ionique | 5 - 1 | 17,5 | 22,8 |
| | 5 - 2 | 16,9 | 23,2 |
| | 5 - 3 | 17,1 | 23 |
| | Moyenne | **17,2** | **23** |
| Enrobé ouvert selon l'invention | 5 - 4 | 16 | 30,7 |
| | 5 - 5 | 15,8 | 30,9 |
| | 5 - 6 | 16,1 | 30,5 |
| | Moyenne | **16** | **30,7** |

On constate que la compacité et l'élimination de la phase aqueuse sont améliorées pour l'enrobé selon l'invention compacté par rapport à l'enrobé compacté ne contenant aucun tensioactif non-ionique.
Le départ du fluide se produit plus tôt pour l'enrobé compacté selon l'invention que pour l'enrobé compacté ne contenant aucune tensioactif non-ionique : en moyenne après 5 girations au lieu de 22 girations. Les cinétiques de rupture des 2 émulsions sont voisines.

Exemple 6 (enrobé ouvert à froid)

On compare ici le compactage de l'enrobé préparé avec l'émulsion sans tensioactif non-ionique de l'exemple 5 avec celui d'un enrobé préparé avec les mêmes proportions d'une émulsion qui se distingue de celle sans tensioactif non-ionique de l'exemple 5 en ce qu'elle contient 5 kg de Polyram® SL au lieu de 6 kg , des mêmes granulats et d'une eau d'ajout préalablement additivée avec, pour 100 parties en poids d'eau

de 0,37 partie en poids de Polyram® SL (émulsifiant cationique),
de 0,37 partie en poids de Rofanol®,
et d'acide chlorhydrique en quantité telle que le pH de la solution aqueuse d'ajout soit égal à 5. Les teneurs en granulats, en bitume et en solution aqueuse d'ajout sont identiques à celles de l'exemple 1.

Les résultats sont réunis dans le tableau 6.

Tableau 6

| type d'enrobé | n° essai | porosité (%) | eau partie (%) |
|---|---|---|---|
| Enrobé sans tensioactif non-ionique | 1 | 17 | 22 |

Tableau 6   (suite)

| type d'enrobé | n° essai | porosité (%) | eau partie (%) |
|---|---|---|---|
| Enrobé selon l'invention | 1 | 15,9 | 25,6 |

La porosité et le départ d'eau sont calculés à l'issue du compactage après 30 girations : on constate que le départ d'eau et la compacité de l'enrobé selon l'invention sont supérieurs à ceux de l'enrobé ne contenant aucun tensioactif non-ionique.

Le départ du fluide se produit plus tôt pour l'enrobé compacté selon l'invention que pour l'enrobé compacté sans tensioactif non-ionique : en moyenne après 15 girations au lieu de 22 girations. Les cinétiques de rupture sont voisines.

Exemple 7 (enrobé coulé à froid)

Selon le mode opératoire décrit ci-dessus, on prépare un enrobé coulé à froid.

Les granulats utilisés sont des microdiorites dont la distribution granulométrique est la suivante :

| 0/2 mm | 55 % |
|---|---|
| 2/6 mm | 45 %, |

qui entre dans un fuseau ISSA de type III et dont la teneur en filler est de 10 % en poids.

La teneur en eau d'ajout est de 10 g d'eau pour 100 g de granulats.

L' émulsion bitumeuse selon l'invention contient :

* 61 % de bitume Via Total de pénétrabilité 70/100,
* 10 kg de Polyram® S (acidifié à l'acide chlorhydrique de telle manière que le pH du savon soit de 2) pour 1.000 kg d'eau + bitume, mélangés à 2,5 kg de Rofanol® pour 1.000 kg d'eau + bitume + émulsifiant cationique + acide. La teneur en bitume est de 7 g pour 100 g de granulats.

A titre comparatif, on prépare une émulsion qui se distingue de la précédente en ce qu'elle ne contient aucun tensioactif non-ionique.

On mélange les granulats humidifiés avec l'eau d'ajout et l'une ou l'autre des émulsions ci-dessus à l'aide d'une spatule dans une gamelle jusqu'à la rupture.

On constate que la rupture est plus rapide pour l'enrobé préparé à partir de l'émulsion selon l'invention (1 min 40) que pour celui préparé à partir de l'émulsion selon l'art antérieur (2 min 10).

Dans une gamelle, on prépare 2 enrobés à partir des mêmes ingrédients mis en oeuvre dans les mêmes proportions ; on stoppe le malaxage manuel juste avant la rupture de l'émulsion et on incline la gamelle et mesuré la durée au bout de laquelle la première goutte d'eau de rupture apparaît en aval de la masse d'enrobé.

Pour l'enrobé selon l'invention, la première goutte d'eau de rupture apparaît au bout de 2 min alors que pour l'enrobé selon l'art antérieur, celle-ci apparaît au bout de 4 min.

Pour les 2 enrobés testés, les quantités d'eau de rupture sont comparables.

Exemple 8 (enduit superficiel)

On prépare une émulsion bitumineuse qui contient :

69 % en volume d'un bitume Elf de pénétrabilité 180/220 commercialisé par la société,

3 kg d'émulsifiant cationique vendu sous la dénomination commerciale Dinoram® S pour 1.000 kg d'eau + bitume. L'indice de rupture de cette émulsion est égal à 100 et sa viscosité égale à 6 °E, ce qui est considéré comme trop peu visqueux dans le cas considéré. La différence D-S, égale à l'écart de concentration en eau de l'émulsion entre haut et bas du récipient de stockage, et qui représente la sensibilité au stockage selon le test ASTM D 244-89 vaut 4% d'eau à 7 jours.

A partir des mêmes ingrédients, on prépare une émulsion plus visqueuse contenant la même proportion de bitume mais contenant 4,5 kg de Dinoram® S et 2 kg de Rofanol® pour 1.000 kg d'eau + bitume + émulsifiant cationique + acide. L'indice de rupture de cette émulsion est égal à 90 et sa viscosité égale à 12 °E et l'écart D-S vaut 1% d'eau à 7 jours.

Exemple 9 (enrobé ouvert à froid)

Les granulats utilisés sont identiques à ceux de l'exemple 1.

Les teneurs en granulats, bitume et eau d'ajout sont identiques à celles de l'exemple 1.

L'émulsion contient

* 60 % en volume du bitume décrit à l'exemple 1,
* 6 kg de Polyram® SL (acidifié à l'acide chlorhydrique de telle manière que le pH du savon soit de 2), pour 1.000 kg d'eau + bitume
* 0,3 kg de Forafac 1110D® commercialisé par la société ATOFINA (tensioactif non ionique sur chaîne alkyle perfluorée à 8 atomes de carbone, avec 10 motifs oxyde d'éthylène) pour 1.000 kg d'eau + bitume + émulsifiant cationique + acide.

On prépare et compacte un enrobé selon l'invention à partir de l'émulsion, des granulats et de l'eau d'ajout décrits ci-dessus et à titre comparatif un enrobé à partir d'une émulsion sans tensioactif non-ionique.

Les résultats sont présentés dans le tableau 7.

Tableau 7

| Type d'enrobé | n° essai | porosité (%) | eau partie (%) |
|---|---|---|---|
| Enrobé ouvert sans tensio-actif non-ionique | 1 - 1 | 17,3 | 15 |
| | 1 - 2 | 17,7 | 17 |
| | 1 - 3 | 17,4 | 18,4 |
| | Moyenne | **17,5** | **16,8** |
| Enrobé ouvert selon l'invention | 9 - 4 | 16,5 | 22,2 |
| | 9 - 5 | 16,3 | 21 |
| | 9 - 6 | 16,7 | 24,3 |
| | Moyenne | **16,5** | **22,5** |

**Revendications**

**1.** Emulsion bitumineuse comprenant au moins un liant bitumineux, de l'eau, au moins un émulsifiant cationique, anionique ou non-ionique, **caractérisée en ce qu'**elle contient en outre au moins un des additifs tensioactifs suivants :

a- un tensioactif non-ionique polyoxyéthylé de formule chimique brute :

$$R_x[O(C_2H_4)]_y \text{ OH ou } R_xCO[O(C_2H_4)]_y \text{ OH}$$

où $R_x$ représente soit une chaîne carbonée linéaire ou ramifiée, saturée ou non, substituée ou non, soit un alkyl(ène)phényle, soit une des chaînes précédentes dans laquelle l'hydrogène est partiellement ou totalement substitué par du fluor,

x représente le nombre d'atomes de carbone de la chaîne carbonée ou de l'alkyl(ène)phényle,

y représente le nombre de motifs oxyde d'éthylène,

avec $7 \leq x \leq 22$, $0 \leq y \leq 8$ et de préférence $y \leq 6$ pour les molécules correspondant à la première formule brute,

avec $7 \leq x \leq 22$, $2 \leq y \leq 8$ et de préférence $y \leq 6$ pour les molécules correspondant à la seconde formule brute,

b- un tensioactif non-ionique polyoxyéthylé de formule chimique brute :

$$R_x[O(C_2H_4)]_y \text{ OH ou } R_xCO[O(C_2H_4)]_y \text{ OH}$$

où $R_x$ représente une chaîne poly(diméthylsiloxane) pour laquelle x représente le nombre d'atomes de silicium, la chaîne étant linéaire ou ramifiée,

y représente le nombre de motifs oxyde d'éthylène,

avec $4 \leq x \leq 15$, $4 \leq y \leq 20$,

c- les tensioactifs amphotères, seuls ou en mélange, de formule chimique brute :

$$R_x[N^+(CH_3)_2](CH_2)_y \text{ A ou } R_xNH(CH_2)_y \text{ COOH ou } R_xNH(CH_2)_y \text{ B,C}$$

où $R_x$ représente les mêmes chaînes qu'à l'alinéa a-

A représente soit le groupement $COO^-$ ; soit le groupement $OSO_3^-$, soit le groupement $OSO_2^-$,

B représente soit le groupement $OSO_3^-$, soit le groupement $OSO_2^-$,

C représente soit le contre-ion cationique d'un métal alcalin ou alcalino-terreux, du fer, du cuivre, du manganèse ou du zinc, soit le cation ammonium, en proportion telle que le sel soit neutre électriquement,

y représente le nombre de motifs $CH_2$,

avec $7 \leq x \leq 22$, $0 \leq y \leq 4$.

d- les tensioactifs amphotères, seuls ou en mélange, de formule chimique brute :

$$R_x[N^+(CH_3)_2](CH_2)_y \text{ A ou } R_xNH(CH_2)_y \text{ COOH ou } R_xNH(CH_2)_y \text{ B,C}$$

où $R_x$ représente les mêmes chaînes qu'à l'alinéa b-

A représente les mêmes groupements qu'à l'alinéa c-

B représente les mêmes groupements qu'à l'alinéa c-

C représente les mêmes ions qu'à l'alinéa c-, en proportion telle que le sel soit neutre électriquement,

y représente le nombre de motifs $CH_2$,

avec $4 \leq x \leq 15$, $0 \leq y \leq 4$

e- un tensioactif alcanolamide de formule chimique brute :

$$R_xCONH(CH_2)_yOH \text{ ou } R_xCON[(CH_2)_yOH][(CH_2)_zOH]$$

où $R_x$ représente les mêmes chaînes qu'à l'alinéa a-,

y et z représentent les nombres de motifs oxyde d'éthylène,

avec $7 \leq x \leq 22$, $1 \leq y \leq 4$, $1 \leq z \leq 4$

f- un tensioactif oxyde d'amine de formule chimique brute :

$$R_x(CH_3)_2N \rightarrow O$$

où $R_x$ représente les mêmes chaînes qu'à l'alinéa a-

avec $7 \leq x \leq 22$

2. Emulsion bitumineuse selon la revendication 1 **caractérisée en ce que** sa concentration en additif(s) tensioactif(s) est comprise 0,2 kg et 8 kg par tonne d'émulsion.

3. Emulsion bitumineuse cationique selon l'une des revendications 1 ou 2, **caractérisée en ce qu'**elle contient au moins un émulsifiant cationique choisi parmi les alkyl(ène)polyamines, les alkyl(ène)polyamines oxyalkylées, les sels d'alkylammonium quaternaire, les alkyl(ène)amidoamines et leurs dérivés de cyclisation alkylimidazolines, avec une chaine alk(én)yle comprenant entre 8 et 22 atomes de carbone, et **en ce qu'**elle contient de préférence au moins un acide.

4. Emulsion bitumineuse anionique selon l'une des revendications 1 ou 2, **caractérisée en ce qu'**elle contient au moins un émulsifiant anionique choisi parmi les alkyl(ène)carboxylates, les alkyl(ène)sulfates , les alkyl(ène)sulfonates, les alkyl(ène)aryl(ène)carboxylates, les alkyl(ène)aryl(ène)sulfates et les alkyl(ène)aryl(ène)sulfonates ainsi que les alkyl(ène)(aryl(ène))esterphosphoriques avec une chaîne alk(én)yle comprenant entre 8 et 22 atomes de carbone et **en ce qu'**elle contient de préférence au moins une base.

5. Emulsion bitumineuse non-ionique selon l'une des revendications 1 ou 2, **caractérisée en ce qu'**elle contient au moins un émulsifiant non-ionique choisi parmi les alkyl(ène)poly(oxyéthylène)alcool, les alkyl(ène)aryl(ène) poly (oxyéthylène)alcool, avec une chaîne alk(én)yle comprenant entre 8 et 22 atomes de carbone et avec un minimum de 9 motifs oxyde d'éthylène.

6. Procédé de préparation d'une émulsion bitumineuse telle que définie dans les revendications 1 à 4, **caractérisé en ce que** le ou les additifs tensioactif(s) sont mélangés avec le(s) émulsifiant(s) cationique(s), le(s) émulsifiant (s) anionique(s) ou le(s) émulsifiant(s) non-ionique(s) avant la fabrication de la phase émulsifiante ou dispersés, soit dans la phase émulsifiante avant la fabrication de l'émulsion, soit dans l'émulsion à n'importe quel moment entre la fin de l'émulsification et l'utilisation de l'émulsion.

7. Matériau obtenu par enrobage ou par mise en contact

    a/ de granulats ou d'un support routier et d'une émulsion bitumineuse telle que définie dans l'une des revendications 1 à 5,
      et/ou
    b/ * de granulats mouillés avec de l'eau ou avec une solution aqueuse contenant au moins un des additifs tensioactifs suivants :

    $\alpha$- un tensioactif non-ionique polyoxyéthylé de formule chimique brute :

$$R_x[O(C_2H_4)]_y\, OH \text{ ou } R_xCO[O(C_2H_4)]_y\, OH$$

    où $R_x$ représente soit une chaîne carbonée linéaire ou ramifiée, saturée ou non, substituée ou non, soit un alkyl(ène)phényle, soit une des chaînes précédentes dans laquelle l'hydrogène est partiellement ou totalement substitué par du fluor,
      x représente le nombre d'atomes de carbone de la chaîne carbonée ou de l'alkyl(ène)phényle,
      y représente le nombre de motifs oxyde d'éthylène,
      avec $7 \leq x \leq 22$, $0 \leq y \leq 8$ et de préférence $y \leq 6$ pour les molécules correspondant à la première formule brute,
      avec $7 \leq x \leq 22$, $2 \leq y \leq 8$ et de préférence $y \leq 6$ pour les molécules correspondant à la seconde formule brute,
    $\beta$- un tensioactif non-ionique polyoxyéthylé de formule chimique brute :

$$R_x[O(C_2H_4)]_y\, OH \text{ ou } R_xCO[O(C_2H_4)]_y\, OH$$

    où $R_x$ représente une chaîne poly(diméthylsiloxane) pour laquelle x représente le nombre d'atomes de silicium, la chaîne étant linéaire ou ramifiée,
      y représente le nombre de motifs oxyde d'éthylène,
      avec $4 \leq x \leq 15$, $4 \leq y \leq 20$,
    x- les tensioactifs amphotères, seuls ou en mélange, de formule chimique brute :

$$R_x[N^+(CH_3)_2](CH_2)_y\, A \text{ ou } R_xNH(CH_2)_y\, COOH \text{ ou } R_xNH(CH_2)_y\, B,C$$

    où $R_x$ représente les mêmes chaînes qu'à l'alinéa $\alpha$-
      A représente soit le groupement $COO^-$, soit le groupement $OSO_3^-$, soit le groupement $OSO_2^-$,
      B représente soit le groupement $OSO_3^-$, soit le groupement $OSO_2^-$,
      C représente soit le contre-ion cationique d'un métal alcalin ou alcalino-terreux, du fer, du cuivre, du manganèse ou du zinc, soit le cation ammonium, en proportion telle que le sel soit neutre électriquement,
      y représente le nombre de motifs $CH_2$,
      avec $7 \leq x \leq 22$, $0 \leq y \leq 4$
    $\delta$- les tensioactifs amphotères, seuls ou en mélange, de formule chimique brute :

$$R_x[N^+(CH_3)_2](CH_2)_y \text{ A ou } R_xNH(CH_2)_y \text{ COOH ou } R_xNH(CH_2)_y \text{ B,C}$$

où $R_x$ représente les mêmes chaînes qu'à l'alinéa β-

A représente les mêmes groupements qu'à l'alinéa χ-

B représente les mêmes groupements qu'à l'alinéa χ

C représente les mêmes ions qu'à l'alinéa χ-, en proportion telle que le sel soit neutre électriquement,

y représente le nombre de motifs $CH_2$,

avec $4 \leq x \leq 15$, $0 \leq y \leq 4$

ε- un tensioactif alcanolamide de formule chimique brute :

$$R_xCONH(CH_2)_yOH \text{ ou } R_xCON[(CH_2)_yOH][(CH_2)_zOH]$$

où $R_x$ représente les mêmes chaînes qu'à l'alinéa α-,

y et z représentent les nombres de motifs oxyde d'éthylène,

avec $7 \leq x \leq 22$, $1 \leq y \leq 4$, $1 \leq z \leq 4$

φ- un tensioactif oxyde d'amine de formule chimique brute :

$$R_x(CH_3)_2N \rightarrow O$$

où $R_x$ représente les mêmes chaînes qu'à l'alinéa α-

avec $7 \leq x \leq 22$,

et de préférence contenant également au moins un tensioactif cationique ou anionique

et * d'une émulsion bitumineuse telle que définie dans l'une des revendications 1 à 5.

**8.** Matériau selon la revendication 7 de type enrobé coulé à froid et tapis routier obtenu.

**9.** Matériau selon la revendication 7 de type enrobé ouvert, enrobé semi-dense, enrobé dense, enrobé stockable et grave-émulsion.

**10.** Tapis routier obtenu par compactage d'un matériau selon la revendication 8 ou 9.

**11.** Matériau selon la revendication 7 de type enduit superficiel et tapis routier obtenus par application successive de couche(s) d'émulsion bitumineuse et de couche(s) de granulats sur un support routier.

**12.** Matériau selon la revendication 7 de type couche d'accrochage et couche d'accrochage obtenue par pulvérisation d'une émulsion bitumineuse sur un support routier.

**Patentansprüche**

**1.** Bitumenemulsion, die mindestens ein bituminöses Bindemittel, Wasser, mindestens einen kationischen, anionischen oder nichtionischen Emulgator umfasst, **dadurch gekennzeichnet, dass** sie ferner mindestens eines der folgenden Tensidadditive enthält:

a - ein nichtionisches Polyoxyethylen-Tensid der folgenden chemischen Summenformel:

$$R_x[O(C_2H_4)]_yOH \text{ oder } R_xCO[O(C_2H_4)]_yOH,$$

worin $R_x$ entweder eine lineare oder verzweigte, gesättigte oder ungesättigte, substituierte oder unsubstituierte Kohlenstoffkette, ein Alkyl(en)phenyl oder einer der vorstehenden Ketten darstellt, in der Wasserstoff teilweise oder vollständig durch Fluor substituiert ist,

x die Anzahl der Kohlenstoffatome der Kohlenstoffkette oder des Alkyl(en)phenyls angibt,

y die Anzahl der Ethylenoxid-Einheiten angibt,

wobei $7 \leq x \leq 22$, $0 \leq y \leq 8$ und vorzugsweise $y \leq 6$ für die Moleküle, die der ersten Summenformel entsprechen,

wobei $7 \leq x \leq 22$, $2 \leq y \leq 8$ und vorzugsweise $y \leq 6$ für die Moleküle, die der zweiten Summenformel entsprechen,

b - ein nichtionisches Polyoxyethylen-Tensid der folgenden chemischen Summenformel:

$$R_x[O(C_2H_4)]_yOH \text{ oder } R_xCO[O(C_2H_4)]_yOH,$$

worin $R_x$ eine Poly(dimethylsiloxan)-Kette darstellt, für die x die Anzahl der Siliziumatome angibt, wobei die Kette linear oder verzweigt ist,

y die Anzahl der Ethylenoxid-Einheiten angibt,

wobei $4 \leq x \leq 15$, $4 \leq y \leq 20$,

c - die amphoteren Tenside, allein oder im Gemisch, der chemischen Summenformel:

$$R_x[N^+(CH_3)_2](CH_2)_yA \text{ oder } R_xNH(CH_2)_yCOOH \text{ oder}$$

$$R_xNH(CH_2)_yB,C,$$

worin $R_x$ die gleichen Ketten wie im Absatz a darstellt,

A entweder die Gruppe $COO^-$, die Gruppe $OSO_3^-$ oder die Gruppe $OSO_2^-$ darstellt,

B entweder die Gruppe $OSO_3^-$ oder die Gruppe $OSO_2^-$ darstellt,

C entweder das kationische Gegenion eines Alkalioder Erdalkalimetalls von Eisen, Kupfer, Mangan oder Zink, oder das Ammoniumkation in einem derartigen Verhältnis darstellt, dass das Salz elektrisch neutral ist,

y die Anzahl der Einheiten $CH_2$ angibt,

wobei $7 \leq x \leq 22$, $0 \leq y \leq 4$,

d - die amphoteren Tenside, allein oder im Gemisch, der chemischen Summenformel:

$$R_x[N^+(CH_3)_2](CH_2)_yA \text{ oder } R_xNH(CH_2)_yCOOH \text{ oder}$$

$$R_xNH(CH_2)_yB,C,$$

worin $R_x$ die gleichen Ketten wie im Absatz b darstellt,

A die gleichen Gruppen wie im Absatz c darstellt,

B die gleichen Gruppen wie im Absatz c darstellt,

C die gleichen Ionen wie im Absatz c in einem derartigen Verhältnis darstellt, dass das Salz elektrisch neutral ist,

y die Anzahl der Einheiten $CH_2$ angibt,

wobei $4 \leq x \leq 15$, $0 \leq y \leq 4$,

e - ein Alkanolamid-Tensid der folgenden chemischen Summenformel:

$$R_xCONH(CH_2)_yOH \text{ oder } R_xCON[(CH_2)_yOH][(CH_2)_zOH],$$

worin $R_x$ die gleichen Ketten wie im Absatz a darstellt,

y und z die Anzahl der Ethylenoxid-Einheiten angeben,

wobei $7 \leq x \leq 22$, $1 \leq y \leq 4$, $1 \leq z \leq 4$,

f - ein Aminoxid-Tensid der chemischen Summenformel:

$$R_x(CH_3)_2N{\rightarrow}O,$$

worin $R_x$ die gleichen Ketten wie im Absatz a darstellt,

wobei $7 \leq x \leq 22$.

2. Bitumenemulsion nach Anspruch 1, **dadurch gekennzeichnet, dass** ihre Konzentration an Tensid-Additiv(en) zwischen 0,2 kg und 8 kg pro Tonne Emulsion beträgt.

3. Kationische Bitumenemulsion nach einem der Ansprüche 1 oder 2, **dadurch gekennzeichnet, dass** sie mindestens einen kationischen Emulgator enthält, der aus den Alkyl(en)polyaminen, Alkylenoxyalkyl(en)polyaminen, quaternären Alkylammoniumsalzen, Alkyl(en)amidoaminen und ihren Alkylimidazolin-Cyclisierungsderivaten mit einer Alk(en)yl-Kette, die zwischen 8 und 22 Kohlenstoffatome umfasst, ausgewählt ist, und dadurch, dass sie vorzugsweise mindestens eine Säure enthält.

4. Anionische Bitumenemulsion nach einem der Ansprüche 1 oder 2, **dadurch gekennzeichnet, dass** sie mindestens einen anionischen Emulgator enthält, der aus den Alkyl(en)carboxylaten, Alkyl(en)sulfaten, Alkyl(en)sulfonaten, Alkyl(en)-aryl(en)carboxylaten, Alkyl(en)aryl(en)sulfaten und Alkyl(en)aryl(en)sulfonaten sowie Alkyl(en)-(aryl(en))phosphorsäureestern mit einer Alk(en)yl-Kette, die zwischen 8 und 22 Kohlenstoffatome umfasst, ausgewählt ist, und dadurch, dass sie vorzugsweise mindestens eine Base enthält.

5. Nichtionische Bitumenemulsion nach einem der Ansprüche 1 oder 2, **dadurch gekennzeichnet, dass** sie mindestens einen nichtionischen Emulgator enthält, der aus Alkyl(en)poly(oxyethylen)alkohol, Alkyl(en)aryl(en)poly(oxyethylen)alkohol mit einer Alk(en)yl-Kette, die zwischen 8 und 22 Kohlenstoffatome umfasst, und mit mindestens 9 Ethylenoxid-Einheiten ausgewählt ist.

6. Verfahren zur Herstellung einer Bitumenemulsion nach den Ansprüchen 1 bis 4, **dadurch gekennzeichnet, dass** das oder die Tensid-Additiv(e) mit dem/den kationischen Emulgator(en), dem/den anionischen Emulgator(en) oder dem/den nichtionischen Emulgator(en) vor der Herstellung der Emulgatorphase gemischt oder entweder in der Emulgatorphase vor der Herstellung der Emulsion oder in der Emulsion zu irgendeinem Zeitpunkt zwischen dem Ende der Emulgierung und der Verwendung der Emulsion dispergiert wird/werden.

7. Material, das erhalten wird durch Umhüllung oder durch in Kontakt Bringen von

a) Granulaten oder einem Straßenträgermaterial und einer Bitumenemulsion nach einem der Ansprüche 1 bis 5 und/oder
b) * Granulaten, die mit Wasser oder einer wässrigen Lösung benetzt werden, die mindestens eines der folgenden Tensid-Additive umfasst:

$\alpha$ - ein nichtionisches Polyoxyethylen-Tensid der folgenden chemischen Summenformel:

$$R_x[O(C_2H_4)]_yOH \text{ oder } R_xCO[O(C_2H_4)]_yOH,$$

worin $R_x$ entweder eine lineare oder verzweigte, gesättigte oder ungesättigte, substituierte oder unsubstituierte Kohlenstoffkette, ein Alkyl(en)phenyl oder eine der vorstehenden Ketten darstellt, in der Wasserstoff teilweise oder vollständig durch Fluor substituiert ist,
x die Anzahl der Kohlenstoffatome der Kohlenstoffkette oder des Alkyl(en)phenyls angibt,
y die Anzahl der Ethylenoxid-Einheiten angibt,
wobei $7 \leq x \leq 22$, $0 \leq y \leq 8$ und vorzugsweise $y \leq 6$ für die Moleküle, die der ersten Summenformel entsprechen,
wobei $7 \leq x \leq 22$, $2 \leq y \leq 8$ und vorzugsweise $y \leq 6$ für die Moleküle, die der zweiten Summenformel entsprechen,
$\beta$ - ein nichtionisches Polyoxyethylen-Tensid der folgenden chemischen Summenformel:

$$R_x[O(C_2H_4)]_yOH \text{ oder } R_xCO[O(C_2H_4)]_yOH,$$

worin $R_x$ eine Poly(dimethylsiloxan)-Kette darstellt, für die x die Anzahl der Siliziumatome angibt, wobei die Kette linear oder verzweigt ist,
y die Anzahl der Ethylenoxid-Einheiten angibt,
wobei $4 \leq x \leq 15$, $4 \leq y \leq 20$,
$\chi$ - die amphoteren Tenside, allein oder im Gemisch, der chemischen Summenformel:

$$R_x[N^+(CH_3)_2](CH_2)_yA \text{ oder } R_xNH(CH_2)_yCOOH \text{ oder}$$

$$R_xNH(CH_2)_yB,C,$$

worin $R_x$ die gleichen Ketten wie im Absatz $\alpha$ darstellt,
A entweder die Gruppe $COO^-$, die Gruppe $OSO_3^-$ oder die Gruppe $OSO_2^-$ darstellt,
B entweder die Gruppe $OSO_3^-$ oder die Gruppe $OSO_2^-$ darstellt,
C entweder das kationische Gegenion eines Alkalioder Erdalkalimetalls von Eisen, Kupfer, Mangan oder Zink, oder das Ammoniumkation in einem derartigen Verhältnis darstellt, dass das Salz elektrisch neutral ist,
y die Anzahl der Einheiten $CH_2$ angibt,
wobei $7 \leq x \leq 22$, $0 \leq y \leq 4$,
$\delta$ - die amphoteren Tenside, allein oder im Gemisch, der chemischen Summenformel:

$$R_x[N^+(CH_3)_2](CH_2)_yA \text{ oder } R_xNH(CH_2)_yCOOH \text{ oder}$$

$$R_xNH(CH_2)_yB,C,$$

worin $R_x$ die gleichen Ketten wie im Absatz $\beta$ darstellt,
A die gleichen Gruppen wie im Absatz $\chi$ darstellt,
B die gleichen Gruppen wie im Absatz $\chi$ darstellt,
C die gleichen Ionen wie im Absatz $\chi$ in einem derartigen Verhältnis darstellt, dass das Salz elektrisch neutral ist,
y die Anzahl der Einheiten $CH_2$ angibt,
wobei $4 \leq x \leq 15$, $0 \leq y \leq 4$,
$\varepsilon$ - ein Alkanolamid-Tensid der folgenden chemischen Summenformel:

$$R_xCONH(CH_2)_yOH \text{ oder } R_xCON[(CH_2)_yOH][(CH_2)_zOH],$$

worin $R_x$ die gleichen Ketten wie im Absatz $\alpha$ darstellt,
y und z die Anzahlen der Ethylenoxid-Einheiten angeben,
wobei $7 \leq x \leq 22$, $1 \leq y \leq 4$, $1 \leq z \leq 4$,
$\phi$ - ein Aminoxid-Tensid der chemischen Summenformel:

$$R_x(CH_3)_2N{\rightarrow}O,$$

worin $R_x$ die gleichen Ketten wie im Absatz $\alpha$ darstellt,
wobei $7 \leq x \leq 22$,
und die vorzugsweise ebenfalls mindestens ein kationisches oder anionisches Tensid umfasst,
und * einer Bitumenemulsion nach einem der Ansprüche 1 bis 5.

**8.** Material nach Anspruch 7 des Typs eines kalt eingebauten Mischguts und erhaltener Straßenbelag.

**9.** Material nach Anspruch 7 des Typs eines offenen Mischguts, eines halbdichten Mischguts, eines dichten Mischguts, eines lagerfähigen Mischguts und einer schweren Emulsion.

**10.** Straßenbelag, der durch Verdichten eines Materials nach Anspruch 8 oder 9 erhalten wird.

**11.** Material nach Anspruch 7 des Typs eines Oberflächenüberzugs und Straßenbelag, der durch aufeinanderfolgendes Aufbringen von (einer) Schicht(en) der Bitumenemulsion und (einer) Schicht(en) von Granulaten auf eine Straßentragschicht erhalten wird.

**12.** Material nach Anspruch 7 des Typs einer Füllschicht und Füllschicht, die durch Zerstäuben einer Bitumenemulsion auf einer Straßentragschicht erhalten wird.

**Claims**

1. Bituminous emulsion comprising at least one bituminous binder, water and at least one cationic, anionic or nonionic emulsifier, **characterized in that** it furthermore contains at least one of the following surfactant additives:

   a- a polyethoxylated nonionic surfactant of crude chemical formula:

   $$R_x[O(C_2H_4)]_yOH \text{ or } R_xCO[O(C_2H_4)]_yOH$$

   where $R_x$ represents either a substituted or unsubstituted, saturated or unsaturated, linear or branched carbon chain, or an alkyl(ene)phenyl, or one of the above chains in which the hydrogen is partly or completely substituted with fluorine;
   x represents the number of carbon atoms of the carbon chain or of the alkyl(ene)phenyl;
   y represents the number of ethylene oxide units;
   with $7 \leq x \leq 22$, $0 \leq y \leq 8$ and preferably $y \leq 6$ for the molecules corresponding to the first crude formula and with $7 \leq x \leq 22$, $2 \leq y \leq 8$ and preferably $y \leq 6$ for the molecules corresponding to the second crude formula;
   b- a polyethoxylated nonionic surfactant of crude chemical formula:

   $$R_x[O(C_2H_4)]_yOH \text{ or } R_xCO[O(C_2H_4)]_yOH$$

   where $R_x$ represents a poly(dimethylsiloxane) chain for which x represents the number of silicon atoms, the chain being linear or branched;
   y represents the number of ethylene oxide units;
   with $4 \leq x \leq 15$ and $4 \leq y \leq 20$;
   c- amphoteric surfactants, alone or as a mixture, of crude chemical formula:

   $$R_x[N^+(CH_3)_2](CH_2)_yA \text{ or } R_xNH(CH_2)_yCOOH \text{ or}$$

   $$R_xNH(CH_2)_yB,C$$

   where $R_x$ represents the same chains as in section a-
   A represents either the COO⁻ group or the $OSO_3^-$ group or the $OSO_2^-$ group,
   B represents either the $OSO_3^-$ group or the $OSO_2^-$ group,
   C represents either the cationic counterion of an alkali metal or alkaline earth metal, iron, copper, manganese or zinc, or the ammonium cation, in a proportion such that the salt is electrically neutral,
   y represents the number of $CH_2$ units,
   with $7 \leq x \leq 22$ and $0 \leq y \leq 4$;
   d- amphoteric surfactants, alone or as a mixture, of crude chemical formula:

   $$R_x[N^+(CH_3)_2](CH_2)_yA \text{ or } R_xNH(CH_2)_yCOOH \text{ or } R_xNH(CH_2)_yB,C$$

   where $R_x$ represents the same chains as in section b-
   A represents the same groups as in section c-
   B represents the same groups as in section c-
   C represents the same ions as in section c-, in a proportion such that the salt is electrically neutral,
   y represents the number of $CH_2$ units,
   with $4 \leq x \leq 15$ and $0 \leq y \leq 4$;
   e- a alkanolamide surfactant of crude chemical formula:

   $$R_xCONH(CH_2)_yOH \text{ or } R_xCON[(CH_2)_yOH][(CH_2)_zOH]$$

   where $R_x$ represents the same chains as in section a-,

y and z represent the numbers of ethylene oxide units,
with $7 \leq x \leq 22$, $1 \leq y \leq 4$ and $1 \leq z \leq 4$;
f- an amine-oxide surfactant of crude chemical formula:

$$R_x(CH_3)_2NO$$

where $R_x$ represents the same chains as in section a-
with $7 \leq x \leq 22$.

2. Bituminous emulsion according to Claim 1, **characterized in that** its concentration of surfactant additive(s) is between 0.2 kg and 8 kg per tonne of emulsion.

3. Cationic bituminous emulsion according to either of Claims 1 and 2, **characterized in that** it contains at least one cationic emulsifier chosen from alkyl(ene) polyamines, alkoxylated alkyl(ene) polyamines, quaternary alkylammonium salts, alkyl(ene)amidoamines and their alkylimidazoline cyclization derivatives, with an alk(en)yl chain comprising between 8 and 22 carbon atoms, and **in that** it preferably contains at least one acid.

4. Anionic bituminous emulsion according to either of Claims 1 and 2, **characterized in that** it contains at least one anionic emulsifier chosen from alkyl(ene)-carboxylates, alkyl(ene)sulphates, alkyl(ene)sulphonates, alkyl(ene)aryl (ene)carboxylates, alkyl(ene)-aryl(ene)sulphates and alkyl(ene)aryl(ene)sulphonates as well as alkyl(ene)(aryl (ene)) phosphoric esters with an alk(en)yl chain comprising between 8 and 22 carbon atoms and **in that** it preferably contains at least one base.

5. Nonionic butuminous emulsion according to either of Claims 1 and 2, **characterized in that** it contains at least one nonionic emulsifier chosen from alkyl(ene)poly(oxyethylene) alcohols and alkyl(ene)-aryl(ene)poly(oxyethylene) alcohols, with an alk(en)yl chain comprising between 8 and 22 carbon atoms and with a minimum of 9 ethylene oxide units.

6. Process for preparing a bituminous emulsion as defined in Claims 1 to 4, **characterized in that** the surfactant additive(s) are mixed with the cationic emulsifier(s), the anionic emulsifier(s) or the nonionic emulsifier(s) before the manufacture of the emulsifying or dispersed phase, either in the emulsifying phase before the manufacture of the emulsion or in the emulsion at any time between the end of emulsification of the emulsion and its use.

7. Material obtained by the coating or the contacting

a) of aggregate or of a road support and of a bituminous emulsion as defined in one of Claims 1 to 5, and/or
b) * aggregate wetted with water or with an aqueous solution containing at least one of the following surfactant additives:

α- a polyethoxylated nonionic surfactant of crude chemical formula:

$$R_x[O(C_2H_4)]_yOH \text{ or } R_xCO[O(C_2H_4)]_yOH$$

where $R_x$ represents either a substituted or unsubstituted, saturated or unsaturated, linear or branched carbon chain, or an alkyl(ene)phenyl, or one of the above chains in which the hydrogen is partly or completely substituted with fluorine;
x represents the number of carbon atoms of the carbon chain or of the alkyl(ene)phenyl;
y represents the number of ethylene oxide units;
with $7 \leq x \leq 22$, $0 \leq y \leq 8$ and preferably $y \leq 6$ for the molecules corresponding to the first crude formula;
with $7 \leq x \leq 22$, $2 \leq y \leq 8$ and preferably $y \leq 6$ for the molecules corresponding to the second crude formula;
β- a polyethoxylated nonionic surfactant of crude chemical formula:

$$R_x[O(C_2H_4)]_yOH \text{ or } R_xCO[O(C_2H_4)]_yOH$$

where $R_x$ represents a poly(dimethylsiloxane) chain for which x represents the number of silicon atoms, the chain being linear or branched;

y represents the number of ethylene oxide units;

with $4 \leq x \leq 15$ and $4 \leq y \leq 20$;

χ- amphoteric surfactants, alone or as a mixture, of crude chemical formula:

$$R_x[N^+(CH_3)_2](CH_2)_y A \text{ or } R_xNH(CH_2)_y COOH \text{ or}$$

$$R_xNH(CH_2)_y B,C$$

where $R_x$ represents the same chains as in section α-

A represents either the $COO^-$ group or the $OSO_3^-$ group or the $OSO_2^-$ group,

B represents either the $OSO_3^-$ group or the $OSO_2^-$ group,

C represents either the cationic counterion of an alkali metal or alkaline earth metal, iron, copper, manganese or zinc, or the ammonium cation, in a proportion such that the salt is electrically neutral,

y represents the number of $CH_2$ units,

with $7 \leq x \leq 22$ and $0 \leq y \leq 4$;

δ- amphoteric surfactants, alone or as a mixture, of crude chemical formula:

$$R_x[N^+(CH_3)_2](CH_2)_y A \text{ or } R_xNH(CH_2)_y COOH \text{ or}$$

$$R_xNH(CH_2)_y B,C$$

where $R_x$ represents the same chains as in section β-

A represents the same groups as in section χ-

B represents the same groups as in section χ-

C represents the same ions as in section χ-, in a proportion such that the salt is electrically neutral,

y represents the number of $CH_2$ units,

with $4 \leq x \leq 15$ and $0 \leq y \leq 4$;

ε- an alkanolamide surfactant of crude chemical formula:

$$R_xCONH(CH_2)_y OH \text{ or } R_xCON[(CH_2)_y OH][(CH_2)_z OH]$$

where $R_x$ represents the same chains as in section α-,

y and z represent the numbers of ethylene oxide units,

with $7 \leq x \leq 22$, $1 \leq y \leq 4$ and $1 \leq z \leq 4$;

φ- an amine-oxide surfactant of crude chemical formula:

$$R_x(CH_3)_2 NO$$

where $R_x$ represents the same chains as in section α-

with $7 \leq x \leq 22$,

and preferably also containing at least one cationic or anionic surfactant

and * of a bituminous emulsion as defined in one of Claims 1 to 5.

8. Material according to Claim 7 of the cold-cast mix type and road pavement obtained.

9. Material according to Claim 7 of the open-graded mix, semidense-graded mix, dense-graded mix, storage-grade mix and emulsion-stabilized gravel type.

10. Road pavement obtained by compacting a material according to Claim 8 or 9.

11. Material according to Claim 7 of the surface-coating and road-pavement type, obtained by successive application of one or more bituminous emulsion coats and of one or more aggregate courses on a road support.

12. Material according to Claim 7 of the bond-coat type and bond coat obtained by spraying a bituminous emulsion on a road support.